# EUROPEAN PATENT APPLICATION

(11) **EP 4 650 898 A1**
(43) Date of publication of application: **19.11.2025**
(21) Application number: 25174655.8
(22) Date of filing: 06.05.2025
(51) Int. Cl.: G05B 23/02, G05B 13/02, G06N 20/00

(54) **METHOD FOR MONITORING AND CONTROLLING THE STATE OF OPERATION OF AN INDUSTRIAL PLANT, AND CORRESPONDING PROCESSING SYSTEM AND COMPUTER PROGRAM PRODUCT**

(30) Priority: 15.05.2024 IT 202400010975
(71) Applicant: Aizoon S.r.l., 10146 Torino (TO) (IT)
(72) Inventor: MANGANARO, Lorenzo, 10146 Torino (TO) (IT); SABBATINI, Gianmarco, 10146 Torino (TO) (IT); FALCO, Paolo, 10146 Torino (TO) (IT)
(74) Representative: Buzzi, Notaro & Antonielli d'Oulx S.p.A.

(57) **Abstract**

Solutions are described for monitoring and controlling the state of operation of an industrial plant (1a). For this purpose, a processing system (40a, 60) obtains, for a current operating condition (CA) of the industrial plant (1a), respective values (300) of a plurality of operating variables (p) of the industrial plant (1a) and estimates (1402), by means of a first classifier, a current state class (AC) of the industrial plant (1a) for the values (300) of the current operating condition (CA). In the case where (1406) the current state class (AC) does not correspond to a requested state class (TC), the processing system (40a, 60) obtains a dataset (400; 202) that comprises, for each operating condition of a plurality of operating conditions that can be implemented by the industrial plant (1a), respective values of the operating variables (p) and a respective state class (v). Next, the processing system (40a, 60) generates (1408) a training dataset (406) as a function of the values (300) of the current operating condition (CA) and of the operating conditions that can be implemented by the industrial plant (1a), and trains (1410) a second classifier configured to estimating the state class (v) of the industrial plant (1a) as a function of the values of the operating variables (p) using the training dataset (406).

In particular, the second classifier is a linear classifier, and the processing system (40a, 60) determines a separation plane (502) of the linear classifier that separates the current state class (AC) from the requested state class (TC), and uses (1412) the separation plane (502) to determine the values (600, 600') of the operating variables (p) for an operating condition that has the requested state class (TC). Finally, the processing system (40a, 60) displays (1418) data (MP; 600, 600') that identify the values (600, 600') of the operating condition that has the requested state class (TC) on a screen and/or controls operation of the industrial plant (1a) as a function of the values (600, 600') of the operating condition that has the requested state class (TC).

## Description

### Technical field

Various embodiments of the present disclosure regard solutions for monitoring and possibly controlling operation of an industrial plant.

### Context

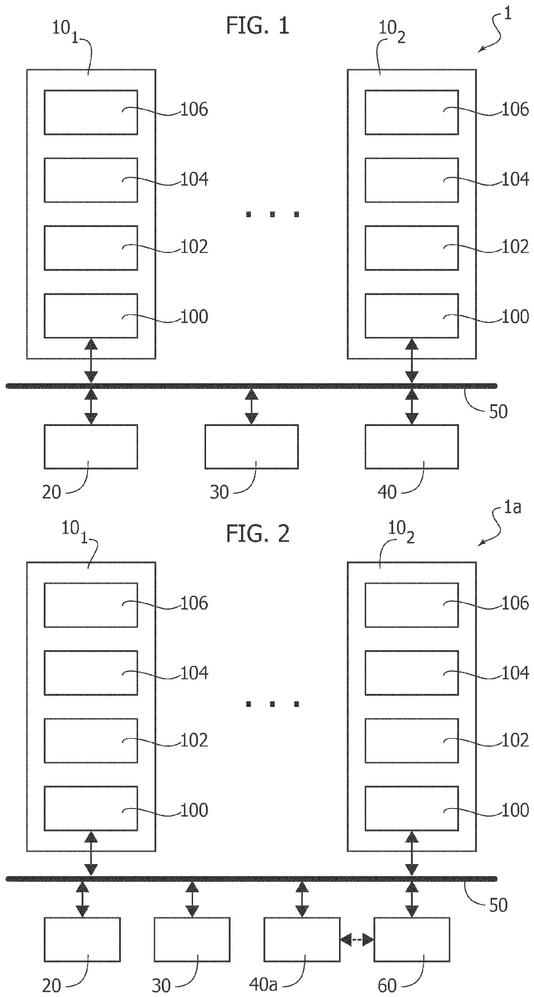

Figure 1 shows an example of an industrial plant 1, such as a production and/or assembly line. In general, the plant 1 comprises one or more processing stations and/or assembly stations 10 arranged, for example, in cascaded fashion, where each station 10 carries out a given operation, such as a processing operation on a piece received at input and/or an operation of assembly of pieces received. For instance, the plant illustrated in Figure 1 envisages two stations 10₁ and 10₂, and at the end of the processing operation the last station 10 delivers a complete semi-finished piece. For instance, the first station 10₁ can receive a piece to be assembled and carries out its pre-set intervention on the original piece to produce a semi-finished piece supplied at output. The semi-finished product at output from the station 10₁ is fed at input to a second station 10₂, where it is received and blocked in position for the subsequent processing operation envisaged in the station 10₂, and so forth.

Typically, each station 10 comprises one or more actuators 106 and/or one or more sensors 104 for execution and/or monitoring of the processing operations carried out in the station. Each station 10 further comprises a control circuit 100 configured for controlling operation of the actuators 106 and/or of the sensors 104 according to a programming operation, and possibly according to data received by the sensors 104 and/or to control parameters. For instance, the actuators 106 and/or the sensors 104 can be connected to the control circuit 100 by means of a communication network, such as an Ethernet network, or a CAN (Controller Area Network) bus, or in general any communication network, whether wired or wireless.

Frequently, the control circuit 100 comprises one or more microprocessors and is implemented, for example, by means of a PLC (Programmable-Logic

Controller). The sensors 104 may be configured for monitoring various parameters that are, for example, associated to the actuators, to the piece being assembled and/or processed in the station, etc. For instance, the operations that are carried out in each station 10 may comprise: mounting of some additional parts, welding, control of the quality of the welds, etc. There may also be envisaged stations that perform exclusively a function of storage and/or conveying, which may, for example, be magazines or conveyor belts.

Each station 10 frequently comprises also an HMI (Human/Machine Interface) unit 102, which enables monitoring of the state of operation of the station 10 and/or setting of one or more control parameters.

Frequently, the various control circuits 100 are connected to a processing system 40 configured for monitoring and/or controlling the plant 10. Frequently, the processing system 40 is connected also to further sensors 20 and/or actuators 30 not specifically associated to a single station 10, such as environmental sensors, like temperature sensors, humidity sensors, etc., environmental actuators, for example, of an air-conditioning system, an air-filtering system, etc. For instance, the control circuits 100, the actuators 30, and the sensors 20 can be connected to the processing system 40 by means of a communication network 50, such as an Ethernet network or a CAN bus, or in general any communication network, whether wired or wireless.

For instance, the processing system 40 may comprise one or more processors configured for implementing a SCADA (Supervisory Control and Data Acquisition) software module configured for monitoring and possibly controlling the various processing circuits 100, and possibly the sensors 20 and/or the actuators 30. In addition or as an alternative, the processing system 40 may also implement a MES (Manufacturing Execution System) software module configured for extracting information from the data supplied by the SCADA module and/or by the control circuits 100, such as the number of pieces produced, the time of stoppage and of operation of the machinery, etc. For instance, the data extracted by the MES system can be supplied to an ERP (Enterprise Resource Planning) platform.

Recently, solutions have been proposed that use machine learning also in the context of industrial plants 1. For instance, such systems frequently use a predictive model that receives a set of variables deriving from numerous sources, amongst which the environmental sensors 20, the sensors 104 integrated in the production line, the configuration parameters, and any other type of data that may be pertinent for the processing operation in progress, and supplies at output a forecast, for example, with reference either to:
a) the final result of the processing operation, for example, in terms of quality of the end product at output from the line or of its compliance to a pre-set standard; or else to
b) other factors relevant for the activity itself, such as the state of wear of the machines at the end of processing, or the risk of failure of one or more components of the plant.

For instance, for this purpose the machiene-learning model may comprise a parameterized mathematical function, such as an artificial neural network, configured for estimating a quantity of interest, e.g., a final quality class of the process, as a function of the values of a plurality of available variables, i.e., the data measured and/or set. In particular, by acquiring a training dataset that comprises the data for a plurality of operating conditions of the plant, and the respective value of the variable of interest, a training algorithm can modify, typically through an iterative method, the parameters of the mathematical function in such a way as to reduce the difference between the estimate of the quantity of interest and the respective data of the dataset. Consequently, once the learning model has been trained, the mathematical function can provide an estimate of the quantity of interest as a function of the values of the available variables currently observed in the industrial plant 1.

For instance, such a predictive software module can be implemented in the processing system 40.

### Summary

In the above context, various embodiments of the present disclosure provide new solutions for monitoring and possibly controlling operation of an industrial plant.

According to one or more embodiments, the above purpose is achieved through a method having the distinctive elements set forth specifically in the ensuing claims. The embodiments further regard a corresponding processing system, such as a corresponding computer program product that can be loaded into the memory of at least one processor and comprises portions of software code for executing the steps of the method when the product is run on a computer. As used herein, reference to such a computer program product is intended as being equivalent to reference to a computer-readable means containing instructions for controlling a processing system in order to co-ordinate execution of the method. Reference to "at least one processor" is clearly intended to highlight the possibility of the present disclosure being implemented in a distributed/modular way.

The scope of protection is defined in the appended claims, which form an integral part of the technical teaching of the description provided herein.

As mentioned previously, various embodiments of the present disclosure regard solutions for monitoring and controlling the state of operation of an industrial plant by means of a processing system.

In various embodiments, the processing system obtains, for a current operating condition of the industrial plant, the respective values of a plurality of operating variables of the industrial plant. For instance, the operating variables of the industrial plant may comprise variables received from sensors of the industrial plant and/or control parameters of the industrial plant.

In various embodiments, the processing system estimates, by means of a first classifier, a current state class of the industrial plant for the values of the current operating condition. In general, the properties of this classifier are not particularly important for the purpose of the present disclosure. For instance, the classifier may be any classifier of the state of an industrial plant. For instance, the state class may correspond to a class of quality of a product processed in the industrial plant, a class of wear of a machine of the industrial plant, or a class of risk of failure of one or more components of the industrial plant.

In various embodiments, the processing system then determines whether the (estimated) current state class corresponds to a requested state class, for example, a class in which the product processed has a requested quality.

In various embodiments, in response to a determination that the current state class does not correspond to the requested state class, the processing system obtains a dataset that comprises, for each operating condition of a plurality of operating conditions that can be implemented by the industrial plant, respective values of the operating variables and a respective state class. In various embodiments, the processing system then generates a training dataset as a function of the values of the current operating condition of the industrial plant and of the dataset of operating conditions that can be implemented by the industrial plant, and trains a second classifier configured for estimating the state class of the industrial plant as a function of the values of the operating variables of the industrial plant using the training dataset. In particular, in various embodiments, the second classifier is a linear classifier.

For instance, for this purpose, the processing system can analyze the dataset of operating conditions that can be implemented by the industrial plant to select a subset of operating conditions of the dataset of operating conditions that can be implemented for which the state class has a value that corresponds to the requested state class. Next, the processing system generates a plurality of synthetic points. For this purpose, the processing system repeats a sequence of steps a plurality of times, i.e., for each synthetic point to be generated. In particular, in various embodiments, the processing system selects, for example, at random, an operating condition of the subset of operating conditions and determines a point that is located between the current operating condition and the selected operating condition. In particular, in various embodiments, the processing system determines the values of a synthetic point that is located in a space between the values of the current operating condition and the values of the selected operating condition. For instance, in various embodiments, the processing system chooses for this purpose, for each variable, a respective value that is located between the respective value of the current point 300 and the respective value of the selected point. For instance, for this purpose, the processing system can calculate the difference between the value of the current point and the respective value of the selected point. Next, the processing system scales the above difference value, for example, by multiplying the difference value by a coefficient chosen between 0 and 1. Finally, the processing system computes the respective value of the synthetic point, adding the scaled difference value to the value of the current point. The above operations are repeated for all the variables, thus generating all the values of the synthetic point. Next, the processing system estimates, by means of the first classifier, a state class of the industrial plant for the values determined, and adds the values determined and the respective estimated state class to the training dataset, where the values determined and the respective estimated state class represent a respective synthetic operating condition.

In various embodiments, the system can also check whether the training dataset comprises representative data.

For instance, in various embodiments, the processing system determines whether the number of synthetic operating conditions that have the requested class is less than a first threshold. When the number of synthetic operating conditions that have the requested class is less than the first threshold, the processing system selects a synthetic point of the training dataset that has the class of the current operating condition and removes the synthetic operating conditions that have the class of the current operating condition from the training dataset. Next, the processing system generates new synthetic points, using this time the selected synthetic point instead of the values of the current operating condition. In particular, in various embodiments, the processing system selects an operating condition of the subset of operating conditions and determines the values of a point that is located in a space between the values of the selected synthetic operating condition and the values of the selected operating condition. Next, the processing system estimates, by means of the first classifier, a state class for the values determined and adds the values determined and the respective estimated state class to the training dataset.

In addition or as an alternative, the processing system determines whether the number of synthetic operating conditions of the training dataset that have the class of the current operating condition is less than a second threshold. When the number of synthetic operating conditions that have the class of the current operating condition is less than the second threshold, the processing system generates further synthetic points, however only with respect to the operating conditions of the subset of operating conditions that have the shortest distance from the values of the current operating condition. Consequently, in various embodiments, the processing system selects the operating conditions of the subset of operating conditions that have the shortest distance from the values of the current operating condition. Next, the processing system selects an operating condition of the aforesaid operating conditions and determines the values of a point that is located in a space between the values of the current operating condition and the values of the selected operating condition. Finally, the processing system estimates, by means of the first classifier, a state class for the values determined, and adds the values determined and the respective estimated state class to the training dataset.

In addition or as an alternative, the processing system can filter the subset of operating conditions used for generating the synthetic points. For instance, in various embodiments, the processing system filters the subset of operating conditions to remove outliers from the subset of operating conditions. For example, for this purpose, the processing system can execute a sequence of operations for each operating condition of the subset of operating conditions. For instance, in various embodiments, the processing system selects an element of the subset of operating conditions and selects/determines a given number of elements of the dataset of operating conditions that can be implemented that have the shortest distance from the selected element. Next, the processing system determines the number of the selected elements that have the requested state class and verifies whether the number of the selected elements that have the requested state class is higher than a third threshold. Therefore, when the number of the selected elements that have the requested state class is less than the third threshold, the point is likely to be an outlier. Consequently, in response to a determination that the number of the selected elements that have the requested state class is higher than the third threshold, the processing system can add the selected element to a first list (safe points). Otherwise, the processing system adds the selected element to a second list (potential outliers).

Consequently, in various embodiments, the processing system can use as filtered subset of operating conditions only the operating conditions of the first list. Alternatively, the processing system can determine whether the number of the elements of the first list is higher than a fourth threshold. In this case, in response to a determination that the number of the elements of the first list is higher than the fourth threshold, which means that the first list comprises a sufficient number of points, the processing system can use the elements of the first list as filtered subset of operating conditions. Instead, in response to a determination that the number of the elements of the first list is not higher than the fourth threshold, the processing system can use the elements of the first list and a given number of elements of the second list as filtered subset of operating conditions. For instance, in various embodiments, the given number of elements of the second list corresponds to the elements of the second list that have the shortest distance from the values of the current operating condition of the industrial plant.

In various embodiments, once the processing system has trained the linear classifier, it determines a separation plane of the linear classifier that separates the current state class from the requested state class and uses the separation plane to determine the values of the operating variables for an operating condition that has the requested state class.

For instance, in various embodiments, the processing system determines a point in the separation plane that has the minimum distance from the values of the current operating condition of the industrial plant.

In various embodiments, the processing system can also analyze the training dataset to determine, for each operating variable, a respective minimum value and maximum value. In this case, the processing system can move the point in the separation plane into a new point that is located in the separation plane and has values for the operating variables that are between the respective minimum and maximum values for the operating variables. For instance, this makes it possible to guarantee that the end point is in the range of the values of the training dataset.

In various embodiments, the movement of the point can also take into consideration further constraints. For instance, in various embodiments, the processing system selects a new point that will satisfy one or more further constraints for each operating variable, where each further constraint can indicate that the respective operating variable is not modifiable, or the respective operating variable can be modified only within a given range.

Finally, in various embodiments, the processing system displays data that identify the values of the operating condition that has the requested state class on a screen and/or controls operation of the industrial plant as a function of the values of the operating condition that has the requested state class.

### Brief description of the drawings

The embodiments of the present disclosure will not be described with reference to the annexed drawings, which are provided purely by way of nonlimiting example and in which:
- Figure 1 shows an example of an industrial plant;
- Figure 2 shows an embodiment of an industrial plant according to the present disclosure;
- Figure 3 shows an embodiment of operation of a processing system configured for estimating a state class of the industrial plant as a function of respective values of a set of variables;
- Figure 4 shows an embodiment of the processing system of Figure 3;
- Figure 5 shows an embodiment of a learning step of Figure 3 for training a classifier;
- Figure 6 shows an embodiment of a training dataset used in the learning step of Figure 5;
- Figure 7 shows an embodiment of the data of a current operating condition of the industrial plant;
- Figure 8 shows an embodiment of a training dataset obtained by means of operations of feature extraction and/or selection;
- Figure 9 shows an embodiment of use of a classifier trained for estimating a state class of the industrial plant as a function of the data of the current operating condition of the industrial plant;
- Figure 10 shows an embodiment of the data used by the classifier trained for estimating the state class of the industrial plant;
- Figure 11 shows an embodiment of a processing system configured for monitoring and controlling the state of operation of the industrial plant using a linear classifier;
- Figure 12 shows an embodiment for generating a training dataset used for training the linear classifier;
- Figure 13 shows an embodiment for filtering the training dataset;
- Figure 14 shows an embodiment of the training dataset used for training the linear classifier;
- Figures 15, 16A, 16B, and 17 show details of operation of the embodiment of Figure 12; and
- Figure 18 shows an embodiment of use of the linear classifier to supply data useful for controlling operation of the industrial plant.

### Detailed description

In the ensuing description, numerous specific details are provided to enable an in-depth understanding of the embodiments. The embodiments may be implemented without one or more of the specific details, or with other methods, components, materials, etc. In other cases, well-known operations, materials, or structures are not represented or described in detail so that the aspects of the embodiments will not be obscured.

Reference throughout the ensuing description to "an embodiment" or "one embodiment" is intended to indicate that a particular feature, distinctive element, or structure described with reference to the embodiment is comprised in at least one embodiment. Thus, the use of phrases such as "in an embodiment" or "in one embodiment" in the various parts of this description does not necessarily refer to one and the same embodiment. Moreover, the particular features, distinctive elements, or structures may be combined in any way in one or more embodiments.

The references are presented herein merely for convenience and do not limit the scope or the meaning of the embodiments.

As mentioned previously, the present disclosure regards a system which can be integrated in an industrial plant that makes it possible to define and possibly implement in real time a feedback so as to correct the processing operation in progress in an industrial plant.

Figure 2 shows an embodiment of an industrial plant 1a according to the present disclosure. In various embodiments, the plant 1a has the general structure described with reference to Figure 1; i.e., the plant 1a comprises:
- actuators 106 of the stations 10 and possible actuators 30, which affect the process;
- sensors 104 of the stations 10 and possible sensors 20; and
- devices that control operation of the actuators 106 and 30 and of the sensors 104 and 20, such as the control circuits 100 of the stations 10 and a processing system 40a.

In particular, in various embodiments, the processing system 40a is configured for monitoring a plurality of variables. As mentioned previously, in various embodiments, the processing system 40a is connected via an appropriate communication system 50 to the stations 10 and to the optional sensors 20 and/or actuators 30 in such a way as to monitor operation of the plant 1a. Moreover, in various embodiments, the processing system 40a can receive, and possibly set, one or more control parameters of the stations 10, such as control parameters of the control circuits 100, for example, control parameters set via one or more HMIs 102. Consequently, the variables monitored by the processing system 40a may include:
- the variables monitored via the sensors 104 integrated in the stations 10, and optionally the variables monitored via the sensors 20, such as thermometers in the room; and
- the control parameters of the stations 10, and optionally of the actuators 30.

In various embodiments, the processing system 40a can obtain, for example, receive, the values of further variables that affect the process, such as data that indicate one or more characteristics of the machining stock entering the processing process and/or the degree of skill/training of the operators involved and/or important information on correlated processes.

As mentioned previously, in various embodiments, the processing system 40a is configured to supply an estimate of a variable of interest, such as an estimate of the end result of the processing operation, for example, in terms of quality of the end product at output from the line or its compliance to a pre-set standard, or of relevant factors for the activity itself, such as the state of wear of the machine at the end of processing or the risk of failure of one or more components of the plant.

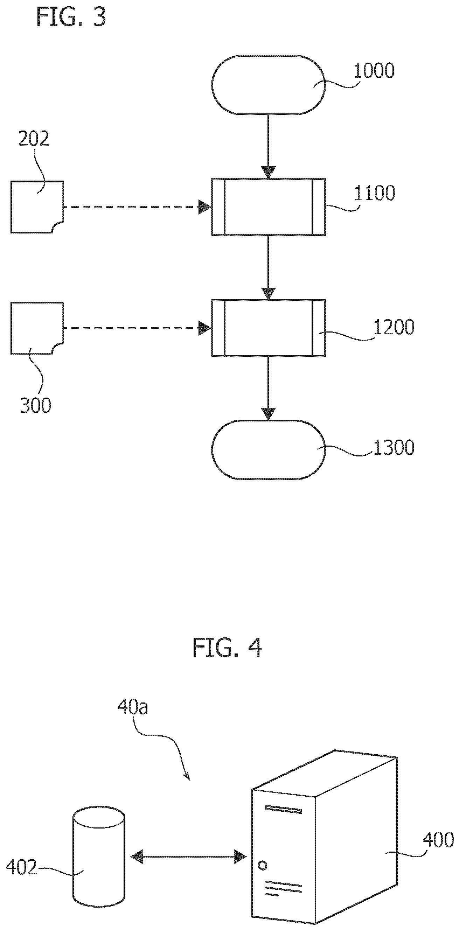

Figure 3 shows an embodiment of operation of a processor 400 of the processing system 40a configured for estimating a variable of interest for a given industrial plant (output datum) as a function of respective values of a set of variables (input data).

For instance, as illustrated in Figure 4, the processor 400 may be implemented by any processing system, possibly even in distributed form, and may comprise, for example, a computer, a smartphone or tablet, and/or a remote server. Consequently, operation of the processor 400 can be implemented via software code executed by one or more microprocessors and/or one or more coprocessors/artificial-intelligence accelerators.

In the embodiment considered, after a start step 1000, the processor 400 trains, in a step 1100, an machiene-learning algorithm using a training dataset 202 that comprises a plurality of sets of values for the variables monitored. For instance, the training dataset 202 may be stored in one or more databases 402 managed by the processor 400. Consequently, in a step 1200, the processor 400 can use the trained algorithm to estimate the value of the variable of interest as a function of the respective data 300 of the variables currently monitored, and the method terminates in an end step 1300.

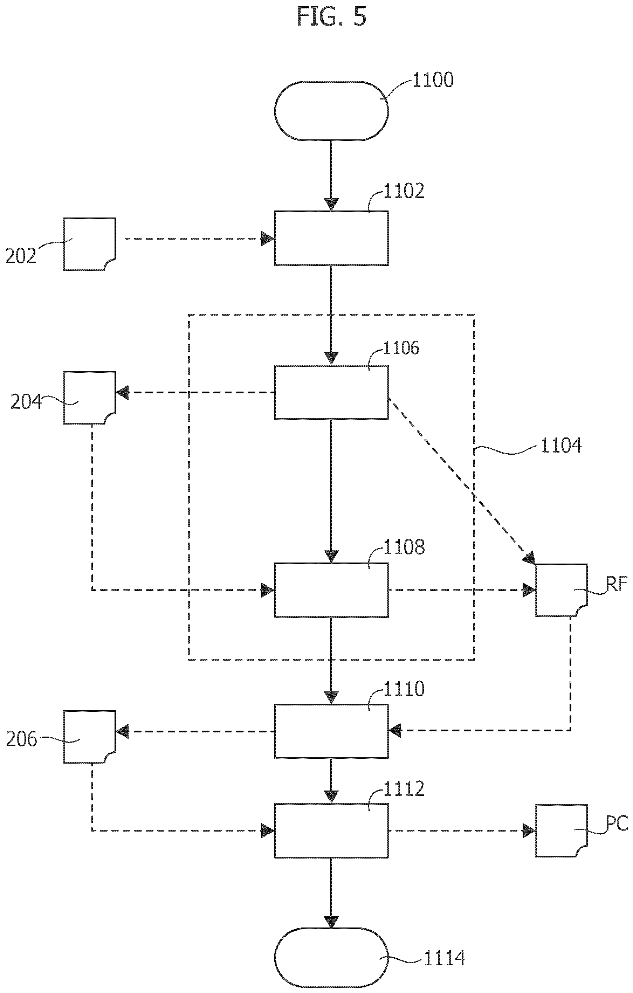

Figure 5 shows a possible embodiment of the learning step 1100. Once the learning step 1100 has been started, the processor 400 obtains, in a step 1102, the training dataset 202.

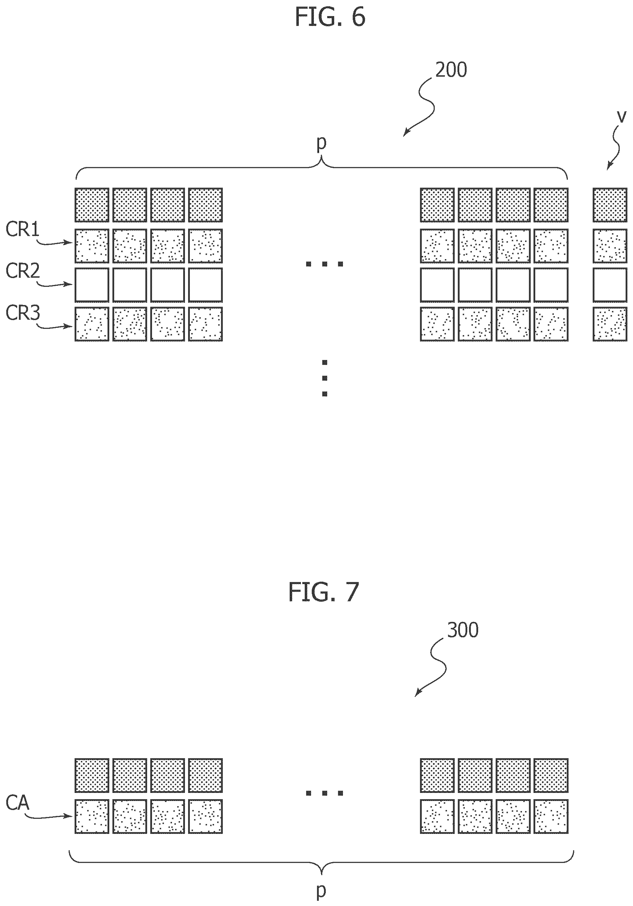

As illustrated in Figure 6, in various embodiments, the dataset 202 corresponds to a table, list, or matrix of data that comprises the values for a respective number of monitored variables p, for example, variables p₁, p₂ and p₃, for a plurality of m operating conditions CR of the industrial plant 1a, for example, conditions CR1, CR2, etc. Moreover, the dataset 202 comprises, for each operating condition CR, the respective value of the variable of interest v.

As illustrated in Figure 7, in the embodiment considered, the data 300 hence comprise the data of the variables p for an operating condition CA to be evaluated, for example, the values of the variables p currently monitored in the plant 1a. Consequently, the processor 400 should estimate, in step 1200, a respective value v' for the variable of interest v as a function of these data 300.

In various embodiments, the processor 400 analyzes the training dataset 202 in a step 1104 that implements one or more feature-extraction and/or feature-selection algorithms. These algorithms have in common the fact that the processor 400 stores, in step 1104, one or more mapping rules RF used for generating a plurality of features F as a function of the variables p of the training dataset 202. For instance, illustrated schematically in Figure 5 is a feature-extraction step 1106 and a feature-selection step 1108.

For instance, in various embodiments, the processor 400 can generate, in step 1106, a reduced matrix 204 by projecting the matrix 202 in an m-dimensional subspace, for example, via PCA (Principal-Component Analysis). PCA and its variants are well known to the person skilled in the art. For instance, for this purpose, the book by T. Jolliffe, "Principal Component Analysis", Springer Series in Statistics, Springer-Verlag, New York, 2002, ISBN 0-387-95442-2, may be cited, the contents of which are incorporated for this purpose herein for reference. The person skilled in the art will appreciate that a very large number of other feature-extraction methods are known, and there may be cited, for example, the Wikipedia^{®} webpage *"Feature extraction"*, available, for example, at the link https://en. wikipedia.org/wiki/Feature_extraction, the contents of which are incorporated herein for reference.

Consequently, in the embodiment considered, the processor 400 can select, in step 1108, a subset of the variables of the matrix 204 (or alternatively, directly a subset of the matrix 202). The person skilled in the art will appreciate that also known is a very large number of feature-selection methods, and there may be cited, for example, the Wikipedia^{®} webpage *"Feature selection"*, available, for example, at the link https://en.wikipedia.org/wiki/Feature_selection, the contents of which are incorporated herein for reference. For instance, in various embodiments, the processor 400 uses, in step 1108, a LASSO (Least Absolute Shrinkage and Selection Operator) model. This method is well known to the person skilled in the art and id described, for example, in the article by Robert Tibshirani, "Regression Shrinkage and Selection via the lasso", Journal of the Royal Statistical Society, Series B (methodological), 1996, Wiley, 58 (1): 267-88, DOI:10.1111/J.2517-6161.1996.TB02080.X, the contents of which are incorporated herein for reference. For instance, by training a LASSO model, in step 1108, the processor 400 can generate the list RF by removing all the variables of the matrix 204 (or directly of the matrix 202) the LASSO coefficients of which are equal to zero. However, the LASSO method can be replaced by other feature-selection methods, for example, one or more methods chosen from the following list:
- the *wrapper* method, for example, using a recursive elimination of the features, a progressive selection of the features, or a regressive selection of the features;
- filters, for example, based upon the chi-squared method, Pearson correlation, Fisher relief or score; or
- embedded methods, for example, embedded methods based upon decision trees, the so-called *random forests*, sparse multinomial logistic regression, and automatic relevance determination, or else regularization-based embedded methods, for example, Ridge or ElasticNet.

For instance, for this purpose, it is possible to cite the article by A. Jović, *et al. "A review of feature selection methods with applications"*, May 2015, 38th International Convention on Information and Communication Technology, Electronics and Microelectronics (MIPRO), DOI:10.1109/MIPRO.2015.7160458, the contents of which are incorporated herein for reference.

Consequently, the feature-selection step 1108 selects only the variables p that have a correlation with the variable of interest v. Instead, the feature-extraction step transforms the input variables p into new variables/features (for example, making linear combinations thereof). Consequently, feature extraction, by its very nature, jeopardizes the interpretability of the model, since the input variables p are tendentially understandable, whereas the new variables do not have an immediate practical meaning. For this reason, in various embodiments, the processor 400 omits the feature-extraction step 1106 and uses only a feature-selection step 1108.

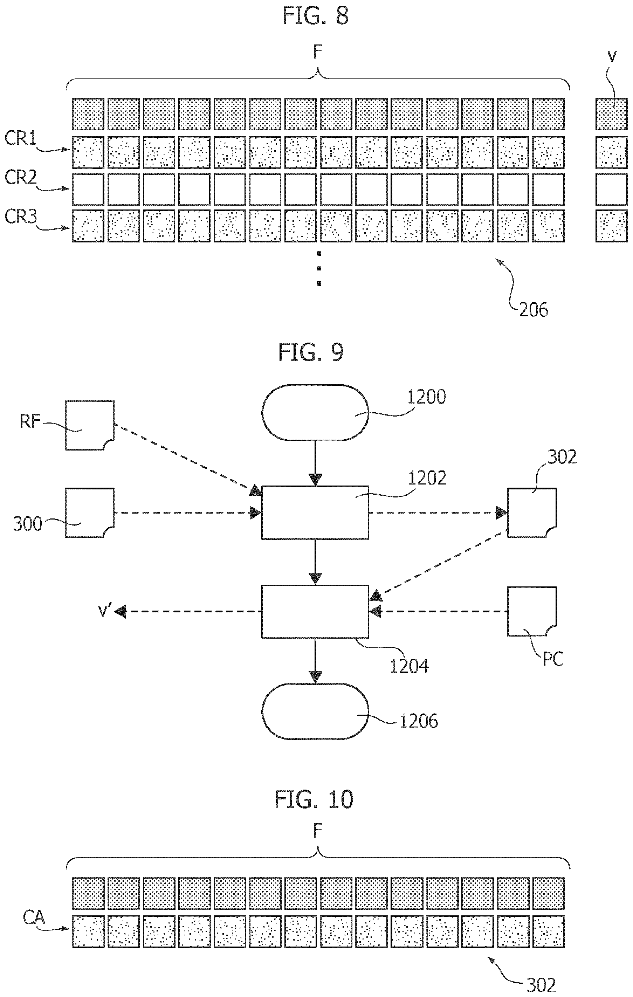

Consequently, in the embodiment considered, the mapping rules RF may comprise the rules used in the steps 1106 and/or 1108 for extraction and/or selection, respectively, of the features F. Consequently, in a step 1110, the processor 400 can generate a training dataset 206 using the mapping rules RF to calculate, for each operating condition, the values of the features F as a function of the respective data 202 of the operating condition (see Figure 8). For instance, the value of the first feature of each operating condition CR is calculated as a function of the data 202 of the respective operating condition CR using the first mapping rule RF.

Consequently, in a step 1112, the processor 400 can use the training dataset 206 (or the dataset 204, or directly the dataset 202) for training a classifier, such as a machine-learning algorithm, capable of estimating the value of the variable of interest v as a function of the values of a given set of features F.

For instance, the classifier may comprise, or be implemented by, an artificial neural network, a support vector machine, or any other parameterized mathematical function configured for estimating the variable of interest v as a function of the values of the features F. In this case, the processor 400 can vary, in step 1112, the values of the parameters PC of the mathematical function in such a way as to minimize a cost function calculated on the basis of the differences between the estimates v' of the variable v that are supplied by the mathematical function and the value of the variable v in the dataset 206. Finally, the training procedure 1100 terminates in an end step 1114.

In various embodiments, the variable of interest v is associated to a state class of the industrial plant 1a, for example a class of quality of the end product, a class of wear of the machines at the end of processing, or a class of risk of failure of one or more components of the plant. Consequently, in various embodiments, the learning method is a classifier configured for dividing the space of the monitored variables p into regions in such a way as to estimate the variable of interest v as a function of the monitored variables.

For this purpose, in various embodiments, the learning model can supply directly the value of a class, for example in the case where the learning model is implemented with a support vector machine or a k-means estimation. However, the learning model may also comprise one or more machine-learning algorithms that supplies estimates of one or more continuous values, for example by means of one or more neural networks. In this case, the learning model may also comprise a decision module, i.e., a classifier, which generates a class of risk as a function of the estimates of the one or more continuous values. For instance, in the simplest case, the decision module can discretize the continuous value. Consequently, in general, the learning method may correspond to any classifier that is capable of dividing the space of the features F (or, with reference to the entire step 1100, the space of the variables p) into regions so as to be able to estimate a variable of interest v that indicates a class of the variable v on the basis of the values of the features F (or, with reference to the entire step 1100, of the values of the variables p) obtained for the operating condition CA.

Figure 9 shows an embodiment of step 1200. In particular, when step 1200 starts, the processor 400 obtains the data 300 for an operating condition CA, for example the operating condition currently monitored in the industrial plant 1a, and uses, in a step 1202, the mapping rules RF for calculating the values 302 of the features F as a function of the data 300 of the operating condition CA (see also

Figure 10). Next, the processor 400 uses, in a step 1204, the trained classifier, as identified, for example, via the values PC of the parameters of the mathematical function, to supply the estimate v' of the variable of interest v as a function of the values 302 of the features F determined for the operating condition CA. Finally, the procedure terminates in an end step 1206.

Consequently, in various embodiments, the processing system 40a implements a predictive model for the variable of interest v. In various embodiments, on the basis of this predictive model, a processing system 60 is able to define a correction to be applied to the variables p by means of actuators that act directly or indirectly on these variables, for example a correction to the working parameters of the machine (direct action) or a variation of the environmental temperature by driving a heating/cooling system (indirect action). In general, the processing system 60 can be implemented via the processing system 40a, for example the processor 400, and/or a further processing system, for example, by means of a software module executed by one or more microprocessors and/or coprocessors/artificial-intelligence accelerators.

As will be described in greater detail hereinafter, the specific predictive model is not particularly important for the purpose of the present description; i.e., the predictive model can be considered as a black-box object with any architecture (machine-learning algorithms, rule-based engines, etc.) that, on the basis of the input variables, supplies a categorical forecast on the state of the industrial plant 1a, such as classification of the end product as being compliant or non-compliant, classification of the quality of the end product as high, medium, or low, or the risk of failure of a component of the system as high, medium, or low, etc.

As illustrated in Figure 2, in various embodiments, the processing system 60 is configured for receiving the data of the monitored variables p. In general, the processing system 60 can receive the data directly from the processing system 40a, for example, a SCADA and/or MES module, and/or monitor one or more of the variables p autonomously by means of the communication system 50.

Moreover, in various embodiments, the processing system 60 is configured for querying the predictive model. For this purpose, the processing system 60 can send queries to the processing system 40a, for example the processor 400, or implement internally step 1200, for example by means of a copy of the trained model (see also the description of Figure 9).

In particular, in various embodiments, the processing system 60, since it has the possibility of querying the predictive model, is configured for identifying in real time a possible correction to be applied to the processing operation through an approach based upon the XAI (eXplainable Artificial Intelligence) concept.

In various embodiments, the processing system moreover receives one or more constraints for the modifiability of one or more of the variables p.

For instance, in various embodiments, a first type of constraint, referred to hereinafter also as constraint of a "locked" type, indicates that the value of the respective variable cannot be modified, for example, the temperature of the room if no air-conditioning system is present, or else a variable monitored when the plant 1a does not comprise actuators capable of modifying the value of that variable, or a variable that for some reason cannot be or must not be modified.

In addition or as an alternative, in various embodiments, a second type of constraint, referred to hereinafter also as constraint of a "bounded" type, indicates that the value of the respective variable can be modified only within a certain range, for example, defined by a respective minimum or maximum value, possibly calculated as a function of a relative range with respect to the value of the variable, such as the duration of a given process that cannot be lower than a given minimum value.

In addition or as an alternative, in various embodiments, a third type of constraint indicates an interdependence between two or more variables, i.e., variables the modification of which automatically entails also modification of a correlated variable; for example, modification of the size of an object also entails a consequent modification of its volume.

In various embodiments, the processing system 60 moreover receives a set of representative data that constitute plausible examples of values for the variables p, for example for implementable operating conditions of the industrial plant 1a. For instance, in various embodiments, these data correspond to one or more of the datasets for the reference operating conditions CR. For instance, in various embodiments, the processing system can receive the data of the training dataset 202 (see also the description of Figure 6).

Consequently, step 1100 trains a classifier that receives a set 202 of different monitored variables p for estimating a class v of the operating state of the industrial plant 1a, for example a class of quality of the end product. As explained previously, considering the high number of variables taken into consideration, this classifier is typically far from readily understandable. In fact, the classifier supplies an evaluation of the endpoint (the class). However, this model typically provides a poor visibility on the reasons why the model has made the evaluation, for example because the machiene-learning model uses, in step 1112, one or more nonlinear mathematical functions; i.e., the machiene-learning model combines the different variables p in a nonlinear way.

In various embodiments, the present description hence supplies solutions for determining a new model that approximates the original classifier. In this context, the inventors have noted that there has recently been proposed a new paradigm known as XAI (eXplainable Artificial Intelligence), which comprises methods (the so-called explainers) that try to understand why an algorithm, given a certain input, yields a given response. These solutions hence enable development of metrics and tools that provide a humanly understandable decoding of the black boxes of machiene learning, passing from a black-box to a white-box model.

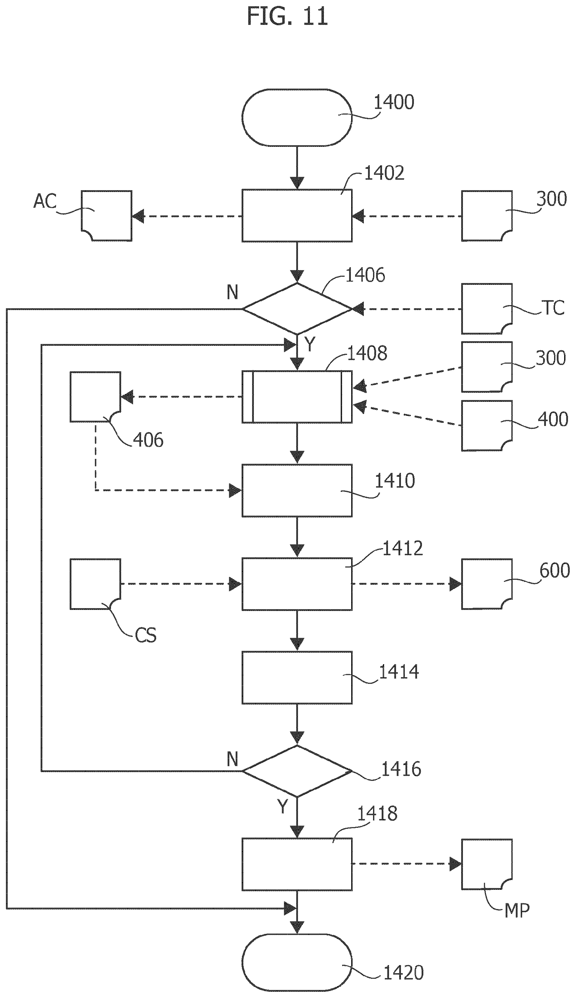

Figure 11 shows an embodiment of operation of the processing system 60, for example implemented via software code executed by one or more processors of the processing system 60.

In the embodiment considered, after a start step 1400, the processing system 60 receives, in a step 1402, the values of the variables p for the current operating condition CA and uses the classifier (step 1200) for estimating the value v' of the variable v for these values, where the value v' corresponds to a current class AC associated to the current operating condition CA.

In a verification step, the processing system 60 verifies, in a step 1406, whether the aforesaid current class AC corresponds to a requested or target class TC. For instance, the class TC may correspond to a product of good or high quality, or a low risk for wear of an item of machinery.

Consequently, in the case where the current class AC corresponds to the requested class TC (output "N" from the verification step 1406), no modifications to the values of the current operating condition CA are required, and the method terminates in an end step 1420.

Instead, in the case where the current class AC does not correspond to the requested class TC (output "Y" from the verification step 1406), modifications to the values of the current operating condition CA are required to move the class into the requested class TC. In particular, in this case, the processing system 60 proceeds to a step 1408, in which the processing system 60 generates a training dataset 406.

In particular, as explained previously, in various embodiments, the processing system 60 receives a dataset 400 that comprises sets of representative data that constitute plausible examples of values for the variables p, for example for implementable operating conditions of the industrial plant 1a. For instance, this dataset 400 may comprise the data of the training dataset 202 and/or a further dataset obtained by monitoring the values of the variables p and of the variable of interest v for a plurality of operating conditions of the industrial plant 1a.

In particular, in various embodiments, the processing system 60 is configured for generating the dataset 406 as a function of the data of the dataset 300 (i.e., the current operating condition CA of the plant 1a) and of the dataset 400 (examples of operating conditions that can be implemented by the industrial plant 1a) using for this purpose an oversampling algorithm.

In particular, in various embodiments, the processing system 60 uses for this purpose a variant of the SMOTE (Synthetic Minority Oversampling TEchnique) algorithm. The SMOTE algorithm is well known, and reference may be made to the Wikipedia^{®} webpage *"Oversampling and undersampling in data analysis"*, available, for example, at the link https://en.wikipedia.org/wiki/Oversampling_and_undersampling_in_data_analysis, the contents of which are incorporated herein for reference.

In particular, in various embodiments, the processing system 60 generates the dataset 304 using the Borderline-SMOTE algorithm, i.e., a variant of SMOTE designed to handle the problem of unbalancing of the classes in the machine-learning dataset. In particular, Borderline-SMOTE concentrates on generation of synthetic examples in the so-called boundary zone or critical zone of the decision boundary, i.e., in the vicinity of a so-called minority class, that are more difficult to classify correctly. In particular, in various embodiments, the minority class corresponds to the requested class TC.

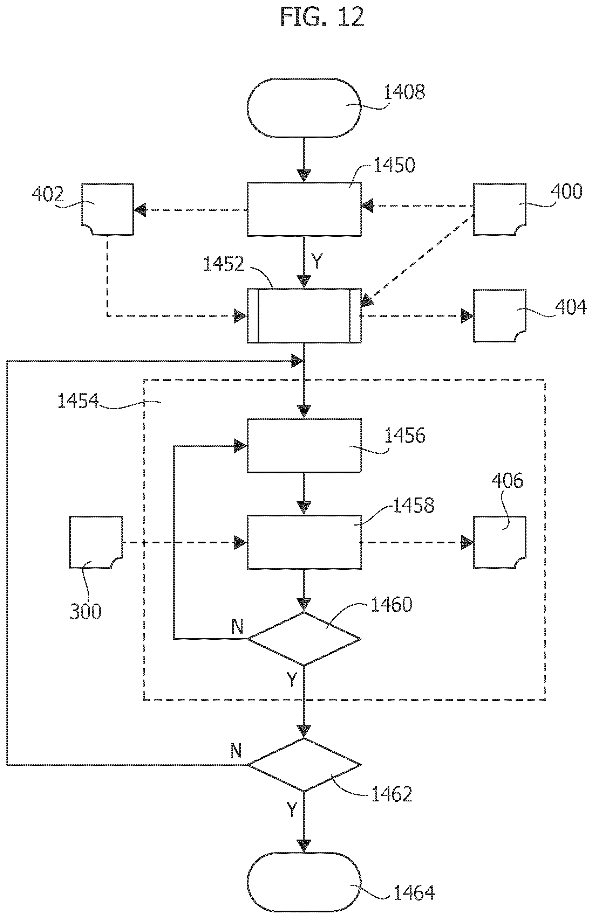

Figure 12 shows an embodiment of step 1408. In particular, in a step 1450, the processing system 60 analyzes the dataset 400 (examples of operating conditions that can be implemented by the industrial plant 1a) to select a subset of operating conditions 402 of the dataset 400 for which the variable of interest v has a value that corresponds to the requested class TC. In general, for this purpose, the dataset 400 may already comprise the values of the variable of interest/class v, or the processing system 60 may use the trained nonlinear classifier to estimate the variable of interest/class v for each operating condition of the dataset 400 (see the description of Figure 9). Consequently, the dataset 402 comprises a plurality of elements/points, for example, in the form of vectors, where each element/point comprises the values of the variables p of a respective operating condition of the dataset 400, which belongs to the requested class TC.

In various embodiments, the processing system 60 may filter further, in a step 1452, the aforesaid dataset 402 to generate a filtered dataset 404. For example, the processing system 60 can remove, in step 1452, the so-called outliers, i.e., isolated points.

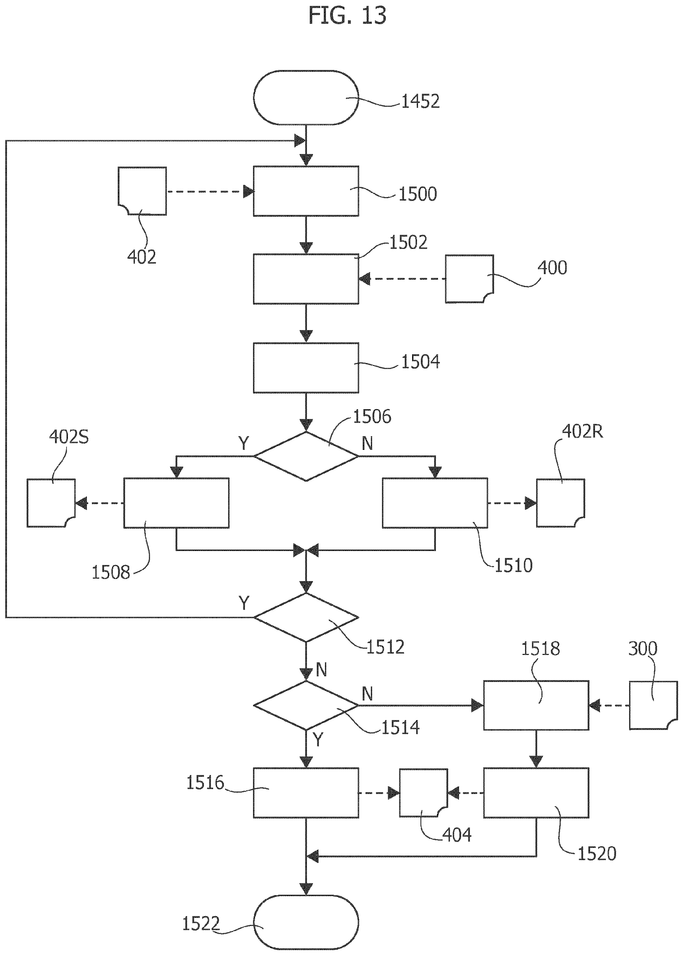

For instance, Figure 13 shows an embodiment of step 1452. In the embodiment considered, the processing system 60 selects, in a step 1500, a point/element of the dataset 402.

Next, the processing system 60 determines, in a step 1502, a given number of points of the dataset 400 that have the shortest distance from the selected point/element, thus selecting a given number of points close to the selected point. For instance, in various embodiments, the processing system 60 can calculate for this purpose the Euclidean distance or the quadratic Euclidean distance for the values of the variables p. Consequently, since the nearby points are selected on the basis of the dataset 400, each nearby point may belong to the class TC or to another class.

Next, the processing system 60 determines, in a step 1504, the number of nearby points that belong to the class TC and compares, in a step 1506, this number with a threshold.

In particular, in the case where the number of nearby points with class TC is less than the threshold (output "N" from the verification step 1506) - for example, more than 50% of the nearby points for a given selected point do not belong to the class TC - the respective selected point is likely to be an outlier, and the processing system can classify, in a step 1510, the respective selected point in a first class, for example, indicating the fact that the point is risky. For instance, in the embodiment considered, the processing system 60 stores the selected point/element or at least data that identify the selected point/element in a first list 402R.

Instead, in the case where the number of nearby points with class TC is greater than a certain threshold (output "Y" from the verification step 1506) - for example more than 50% of the nearby points for a given selected point belong to the class TC - the respective selected point is unlikely to be an outlier, and the processing system can classify, in a step 1508, the respective selected point in a second class, for example indicating the fact that the point is safe. For instance, in the embodiment considered, the processing system 60 stores the selected point/element or at least data that identify the selected point/element in a second list 402S.

In various embodiments, steps from 1500 to 1510 are repeated for all the points/elements of the dataset 402. For instance, as schematically represented via a verification step 1512, the processing system 60 can verify whether further elements/points are to be analyzed, and in the case where further elements/points are to be analyzed (output "Y" from the verification step 1512), the processing system 60 returns to step 1500 to select a subsequent point of the dataset 402. Instead, in the case where all the elements/points have been analyzed (output "N" from the verification step 1512), the processing system 60 proceeds to a step 1514.

In particular, in various embodiments, the processing system 60 verifies, in step 1514, whether the number n of the elements/points classified in the second class (safe points), for example the number of elements in the list 402S, is equal to or higher than a threshold k. In the case where the number of the elements/points classified with the second class is equal to or higher than the threshold k (output "Y" from the verification step 1514), a sufficient number of safe elements 402S has been identified, and the processing system 60 can use, in a step 1516, the values of the points classified in the second class (safe points, for example, the list 402S) for the filtered dataset 404, and operation of step 1452 terminates in an end step 1522.

Instead, in the case where the number n of the elements/points classified in the second class is less than the threshold k (output "N" from the verification step 1514), an insufficient number of safe elements 402S has been identified. In this case, the processing system 60 determines, in a step 1518, a given number of elements/points classified in the first class (unsafe/risky points), for example a given number of the elements in the list 402R, that have the shortest distance from the point/element of the dataset 300 (i.e., from the values of the variables p for the current operating condition), thus selecting a given number of points close to the current operating condition 300. For instance, in various embodiments, the processing system 60 can calculate for this purpose the Euclidean distance or the quadratic Euclidean distance for the values of the variables p. For instance, in various embodiments, the processing system selects in this way the closest (k - n) elements/points classified in the first class. In general, the processing system 60 could also select a greater number of elements.

Consequently, once the processing system 60 has selected, in step 1518, a given number of elements/points classified in the first class, it can use, in a step 1520, the values of the n points classified in the second class (safe points) and the values of the nearby points classified in the first class (unsafe points) for the filtered dataset 404, and operation of step 1452 terminates in an end step 1522.

As shown in Figure 12, in various embodiments, the processing system 60 then uses, in a step 1454, the dataset 402, or preferably the filtered dataset 404, and the current point 300, i.e., the values of the variables p for the current operating condition CA, to determine the training dataset 406.

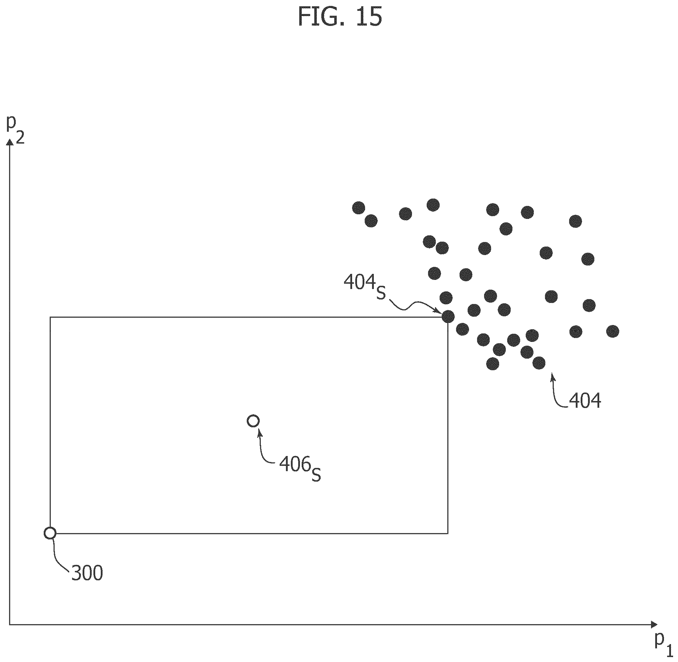

In particular, as shown in Figure 15, in various embodiments, the processing system 60 selects, in a step 1456, for example at random, a point from the dataset 402, or preferably from the filtered dataset 404, for example a point 404_{S}. Next, the processing system 60 chooses at random, in a step 1458, a point 406_{S} that is located in the space between the current point 300 and the selected point 404_{S}. In particular, in various embodiments, the processor chooses for this purpose, for each variable p, a respective value that is located between the respective value of the current point 300 and the respective value of the selected point 404_{S}. For instance, for this purpose, the processing system can calculate the difference between the value of the current point 300 and the respective value of the selected point 404_{S}. Next, the processing system 60 scales the above difference value, for example, by multiplying the difference value by a coefficient chosen between 0 and 1. Finally, the processing system calculates the respective value of the synthetic point 406_{S}, adding the scaled difference value to the value of the current point 300. These operations are repeated for all the variables p, thus generating all the values of the synthetic point 406_{S}. Consequently, in various embodiments, the processing system adds the synthetic point 406_{S} to the training dataset 406.

In various embodiments, the processing system uses, in step 1458, also the trained classifier to estimate the class of the point 406_{S}, i.e., the value of the variable of interest v, and the processing system 60 adds this value to the training dataset 406.

In various embodiments, steps 1456 and 1458 are repeated for a given number N of synthetic points. For instance, this is schematically illustrated via a verification step 1460, in which the processing system 60 verifies whether a given number N of synthetic points has been generated. In the case where the given number N of synthetic points has not been generated (output "N" from the verification step 1460), the processing system 60 returns to step 1456 to select a subsequent point from the dataset 402 or 404.

Instead, in the case where the given number of synthetic points has been generated (output "Y" from the verification step 1460), operation of step 1408 terminates in an end step 1464.

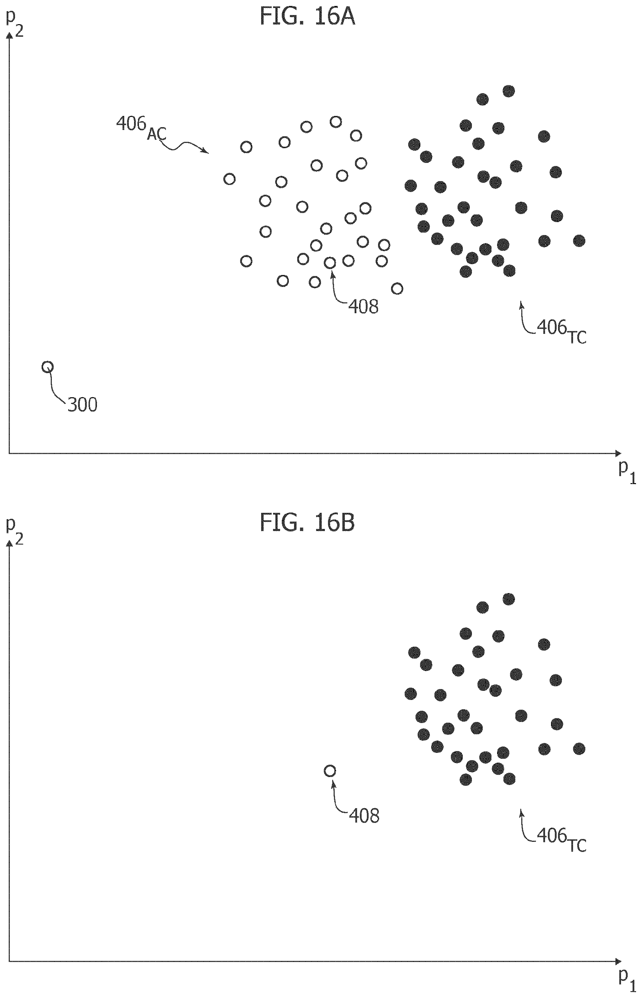

In various embodiments, once all the points of the synthetic dataset 406 have been obtained (output "Y" from the verification step 1460), the processing system 60 verifies, in a verification step 1462, the properties of the synthetic dataset 406. In particular, the inventors have noted that the synthetic dataset 406 comprises representative data if the number of points in the class of the condition CA and the number of points in the requested class TC are greater than respective thresholds. Consequently, in various embodiments, the processing system 60 determines the number of points M of the synthetic dataset 406 that have the requested class TC. For instance, shown in Figure 16A are points 406_{TC} represented as black dots that have the requested class TC and points 406_{AC} represented as white dots that have the class of the condition CA. In the case where the aforesaid number M were less than a first threshold (output "N" from the verification step 1462), the processing system 60 chooses at random a point 408 of the synthetic dataset 406 that has the class of the condition CA and preferably maintains only the M points 406_{TC} of the synthetic dataset 406; i.e., the points 406_{AC} of the synthetic dataset 406 that do not have the requested class TC are eliminated from the dataset 406, as also illustrated in Figure 16B. Next, the processing system 60 returns to step 1452 to generate further points. However, in this case, the processing system 60 uses, in step 1458, no longer the values 300 for the condition CA, but the values of the point 408 chosen at random. For instance, in various embodiments, the processing system 60 generates only N-M further synthetic points and returns to the verification step 1462. Instead, in the case where the aforesaid number is greater than the first threshold (output "Y" from the verification step 1462), the processing system 60 proceeds to the end step 1464. Consequently, this operation gradually moves the reference point of step 1458 towards the requested class TC, and this cycle is repeated until the dataset 406 comprises a number M of points with the class TC that is higher than the first threshold.

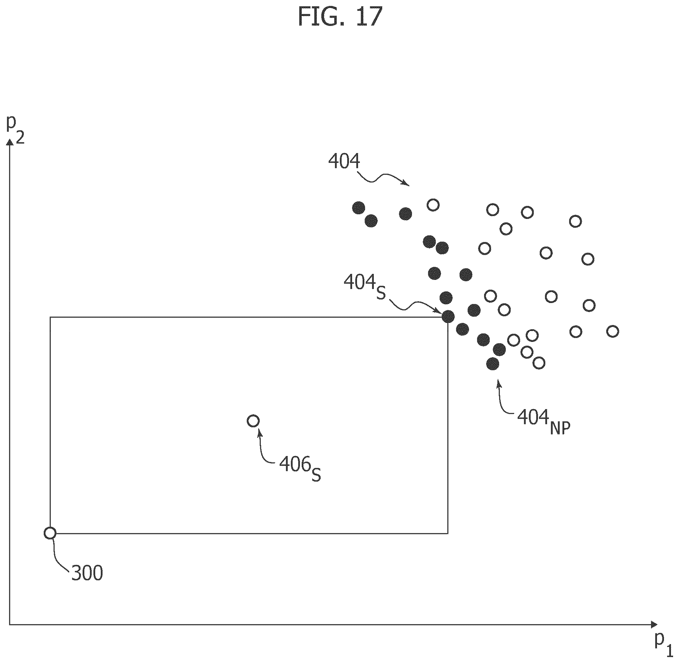

In addition or as an alternative, the processing system 60 determines the number of points L of the synthetic dataset 406 that have the class of the condition CA (see also Figure 16A). In the case where this number L is greater than a second threshold (output "Y" from the verification step 1462), the processing system 60 proceeds to the end step 1464. Instead, in the case where the number were less than the second threshold (output "N" from the verification step 1462), the processing system 60 returns to step 1452 to generate a given number of further synthetic points. As explained previously, the processing system 60 selects, in step 1456, a point that has the requested class TC. Consequently, by repeating the cycle, the processing system 60 can now choose between the points of the dataset 402, or preferably of the filtered dataset 404, and the points of the synthetic dataset 406 that have the requested class TC. In particular, in various embodiments, in this case the processing system 60 now chooses the point 404_{S} only from a given number of points 404_{NP} in the requested class TC that have the shortest distance, for example, the Euclidean distance, from the point 300. For instance, this is illustrated in Figure 17, where the processing system 60 has selected a given number of points 404_{NP} of the dataset 404 that have the shortest distance from the point 300. Consequently, this operation makes it possible to generate further synthetic points close to the point 300.

In various embodiments, the processing system 60 can add to the training dataset also the point 300 and/or the points of the dataset 402, or preferably of the dataset 404.

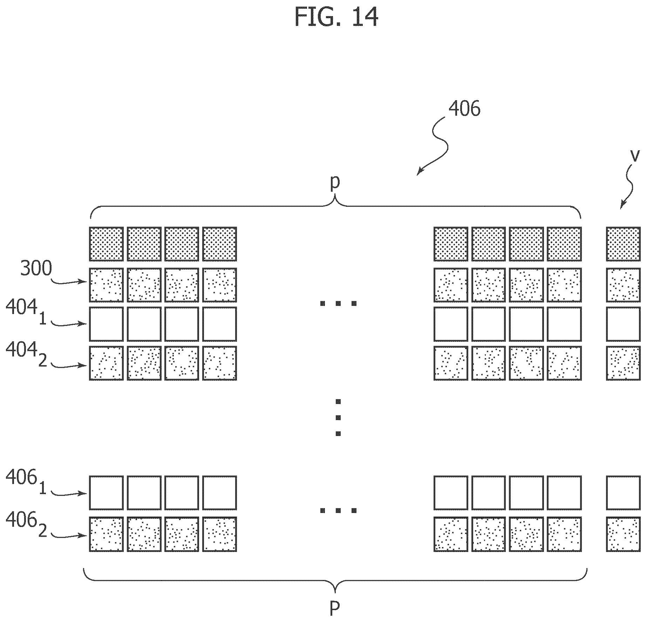

Consequently, as illustrated in Figure 14, in various embodiments, the training dataset comprises the points of the filtered dataset 404, for example, the points 404₁, 404₂, and the synthetic points, for example, the synthetic points 406₁, 406₂, and optionally the current point 300. In particular, each point comprises respective values for the variables p and the variable v. Moreover, by construction, the dataset 406 will comprise both points of the starting class AC and points of the target class TC.

As illustrated in Figure 11, the processing system 60 then uses the training dataset 406 to train, in a step 1410, a new classifier. In particular, in various embodiments, whereas the classifier trained in step 1100 may even be a nonlinear classifier, the classifier trained in step 1408 is a linear classifier. Consequently, in various embodiments, the processor 30 uses the training dataset 406 to train a linear classifier capable of estimating the value of the variable/class of interest v as a function of the values of the set of variables p. The linear classifiers are in themselves well known in the prior art; reference may be made, for example, to the corresponding Wikipedia^{®} webpage *"Linear classifier"*, available, for example, at the link https://en.wikipedia.org/wiki/Linear_classifier, the contents of which are incorporated herein for reference. Basically, for this purpose, the processor 60 determines, in step 1410, the weights of the linear classifier. For instance, the linear classifier may be trained as described with reference to Figure 5, using the dataset 406 instead of the training dataset 202. In particular, in various embodiments, the feature-extraction step 1104 is omitted, i.e., the training dataset 206 used for training the linear classifier in step 1112 directly corresponds to the dataset 406 or a dataset that comprises only a subset of the variables p of the dataset 406 obtained via a feature-selection step 1108 in such a way as to ensure that the linear classifier will remain interpretable with reference to the variables p.

Consequently, in the embodiment considered, step 1408 makes it possible to obtain a training dataset 406 that comprises points in the boundary zone in the direction of the requested class TC, and the linear classifier provides a linear approximation of the decision boundary, so that the linear model can be considered a local explainer of the nonlinear classifier.

In particular, in various embodiments, the processing system 60 uses, in step, 1410 a classifier of the LASSO type. The LASSO linear classifier is in itself well known in the prior art; reference may be made, for example, to the corresponding Wikipedia^{®} webpage *"Lasso"*, available, for example, at the link https://en.wikipedia.org/wiki/Lasso_(statistics), the contents of which are incorporated herein for reference. However, some other linear models may be used, preferably with regularization of an L1 type.

Consequently, thanks to the use of a LASSO-based classifier or another L1-regularization classifier, the training step implements internally a feature selection, selecting a reduced number of variables p used for classifying a point in the class v. In fact, it might be far from useful or far from realizable an indication that suggests to the user to modify, perhaps even by just a small amount, thousands of parameters. In fact, the inventors have noted that it is tendentially preferable to obtain an indication that will enable the desired result to be obtained, i.e., the class TC, by modifying a few variables p as compared to the initial configuration 300. In particular, this feature may be obtained by introducing into the linear model an L1 penalty. Alternatively, the processing system 60 may use, in step 1410, a feature-selection step and any linear classifier.

In various embodiments, the processing system 60 then uses, in a step 1412, the trained linear classifier to determine a movement of the point 300 into a point 600 that belongs to the requested class TC.

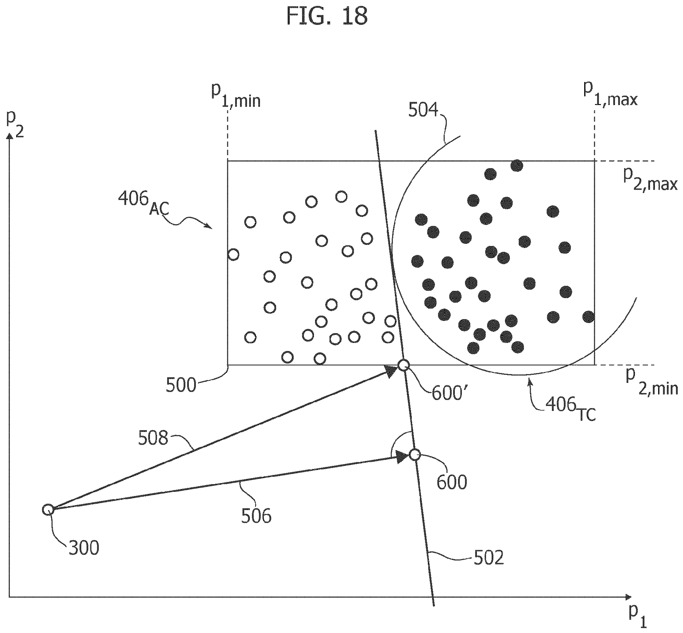

For instance, Figure 18 shows an example where only two variables p₁ and p₂ are taken into consideration. Consequently, the point 300 has respective values for the variables p and has been classified in a respective class AC that is different from the requested class TC. Moreover, illustrated in Figure 18 are also points of the dataset 406, in particular points 406_{AC} that belong to the class AC and points 406_{TC} that belong to the class TC. As explained previously, these points may comprise the points of the dataset 402, or preferably 404, and the synthetic points generated in steps 1456 and 1458.

In particular, once the linear classifier has been trained, it comprises a separation line 502 that divides the points of the class AC from the points of the class TC. In general, considering a number of variables, the line 502 corresponds in actual fact to a (multi-dimensional) separation plane. Such separation planes (the so-called decision boundary) are well known in the context of linear classifiers.

Consequently, the shortest vector that takes the point 300 beyond the separation plane 502, i.e., into the target class TC, corresponds to a vector 506 that passes through the point 300 and is perpendicular to the separation plane 502, where the length of the vector corresponds to the distance between the point 300 and the separation plane 502. For instance, for this purpose, the processor can determine the direction of the vector 506 by calculating the normal to the multi-dimensional separation plane 402. In particular, since it is a plane, this calculation is easy as compared to a nonlinear separation, because the normal has the same direction in each point of the plane 502. Moreover, knowing the normal, the processor can determine the (minimum) distance between the point 300 and the plane 502. Consequently, knowing the direction and the distance, the processor can determine the position of a modified point 600 that is located in (or beyond) the separation plane 502.

However, the above solution presents the drawback that this movement could take the modified point 600 into an area such that the linear classifier is not valid. In fact, as illustrated in Figure 18, the points 406_{AC} and 406_{TC} obtained, for example, via Borderline-SMOTE and used for training the classifier are mainly located in an area 500. Consequently, whereas the linear classifier uses a linear decision boundary 502, the original nonlinear classifier could have a nonlinear decision boundary 504 that does not comprise the modified point 600. For instance, as may be noted, by moving the starting point 300 following the perpendicular 506, we would end up in an area where the linear approximation is no longer valid.

Consequently, in various embodiments, the processing system 60 uses, in step 1412, one or more constraints CS.

In particular, beyond the main objective of moving the point 300 beyond the separation plane 502, a first constraint imposes that the modified point 600 is located in the area 500. For instance, for this purpose, the processing system 60 can determine an area that delimits the points 406 used for training the linear classifier. For instance, for this purpose, the processing system 60 can determine for each variable p a respective minimum value pₘᵢₙ and a respective maximum value pₘₐₓ for the points of the training dataset 405. For instance, represented schematically in Figure 18 are the minimum value p_{1,min} and the maximum value p_{1,max} for the variable p₁, and the minimum value p_{2,min} and the maximum value p_{2,max} for the variable p₂.

Consequently, in various embodiments, the processing system 60 is configured to determine a modified point 600' that:
a) is located in the separation plane 502 or beyond the separation plane 502 with respect to the point 300; and
b) has values for the variables p that are between the respective minimum and maximum values for the variables p; for example, the value of the variable p₁ of the modified point 600 must be between p_{1,min} and p_{1,max}.

In various embodiments, the processing system 60 chooses between these points a point 600' that has the minimum distance from the point 300. For instance, for this purpose, the processing system 60 can first move the point 300 along the perpendicular 506 to select a point 600 in the separation plane 5002. Next, the processing system 60 can move the point 600 in the separation plane 502 into a point 600' that satisfies the minimum and maximum values for the variables p. For instance, in Figure 18, the processing system 60 can choose as value for the variable p₂ the minimum value p_{2,min} and for the variable p₁ the respective value of the separation plane 502 for p₂ = p_{2,min}.

As explained previously, in various embodiments, the processing system 60 can receive also one or more further constraints for each variable p. For instance, in various embodiments, each further constraint can indicate that:
- the respective variable p is not modifiable; i.e., it is constant; or
- the respective variable p can be modified only within a certain range comprised between a respective lower threshold and a respective upper threshold, which preferably are settable.

In addition or as an alternative, in various embodiments, a further constraint can indicate an interdependence between two or more variables p, i.e., variables p modification of which automatically entails also modification of a correlated variable p; for example, modification of the size of an object also entails a consequent modification of its volume.

Consequently, in various embodiments, once the processing system 60 has selected a given point 600' (or 600), it can determine, in a step 1418, the modifications MP, i.e., the differences between the values of the point 600' (or 600) and the point 300, and the method terminates in the end step 1420.

In various embodiments, once the processing system 60 has determined the point 600' (or 600), the processing system can estimate, in a step 1414, the value v' for the class v and verify, in a step 1416, whether this value corresponds to the requested class TC. When the estimated class v' corresponds to the class TC (output "Y" from the verification step 1416), the processing system 60 can then proceed to step 1418. Instead, when the estimated class v' does not correspond to the class TC (output "N" from the verification step 1416), the processing system 60 can return to step 1408, using in this case, in step 1408, instead of the original point 300, the values of the point 600' (or 600) obtained via the step 1412. Consequently, in this case, the point 600' (or 600) gradually moves into the class TC.

In general, step 1418 is purely optional, and the processing system 60 could only obtain the values of the point 600' (or 600).

In various embodiments, once the processing system 60 has obtained the values of the point 600' (or 600), or the modifications MP, it can carry out various operations. For instance, in the simplest case, the processing system 60 can communicate the values 600' (or 600) and/or MP to an operator, for example by displaying these data on a screen. Consequently, in this case, it may be the task of the operator to act on the industrial plant 1a so as to obtain the new requested values, i.e., the values of the point 600' (or 600).

In addition or as an alternative, for example in the case where an operator accepts the new values, the processing system 60 controls the industrial plant 1a - for instance, it communicates with the control system of the industrial plant 1a, for example the control circuits 100 and/or the processing system 40a - to set one or more control parameters of the actuators 16 and/or 30, in such a way as to obtain the requested values for the point 600' (or 600). Precisely for this reason, the constraint for variables "locked" is envisaged in order to exclude the variables p that are not modifiable via actuators of the industrial plant 1a.

Of course, without prejudice to the principles underlying the invention, the details of construction and the embodiments may vary widely with respect to what has been described and illustrated herein purely by way of example, without thereby departing from the scope of the present invention, as defined by the annexed claims.

## Claims

1. A method for monitoring and controlling the state of operation of an industrial plant (1a), comprising executing the following steps by means of a processing system (40a, 60):
- obtaining for a current operating condition (CA) of said industrial plant (1a) respective values (300) of a plurality of operating variables (p) of said industrial plant (1a);
- estimating (1402) by means of a first classifier a current state class (AC) of said industrial plant (1a) for the values (300) of the current operating condition (CA) of said industrial plant (1a);
- determining (1406) whether said current state class (AC) corresponds to a requested state class (TC); and
- in response to a determination that said current state class (AC) does not correspond to said requested state class (TC):
- obtaining a dataset (400; 202) that comprises, for each operating condition of a plurality of operating conditions that can be implemented by said industrial plant (1a), respective values of said plurality of operating variables (p) and a respective state class (v);
- generating (1408) a training dataset (406), as a function of said values (300) of said current operating condition (CA) of said industrial plant (1a) and said dataset (400; 202) of operating conditions that can be implemented by said industrial plant (1a);
- training (1410) a second classifier configured to estimating said state class (v) of said industrial plant (1a) as a function of the values of said plurality of operating variables (p) of said industrial plant (1a) using said training dataset (406), wherein said second classifier is a linear classifier;
- determining a separation plane (502) of said linear classifier that separates said current state class (AC) from said requested state class (TC);
- using (1412) said separation plane (502) to determine the values (600, 600') of said plurality of operating variables (p) for an operating condition that has said requested state class (TC); and
- displaying (1418) data (MP; 600, 600') that identify said values (600, 600') of said operating condition that has said requested state class (TC) on a screen and/or controlling operation of said industrial plant (1a) as a function of said values (600, 600') of said operating condition that has said requested state class (TC).

2. The method according to claim 1, wherein:
- said operating variables (p) of said industrial plant (1a) comprise a plurality of variables received from sensors (104, 20) of said industrial plant (1a), and/or a plurality of control parameters of said industrial plant (1a); and/or
- said state class (v) corresponds to a class of quality of a product processed in said industrial plant (1a), a class of wear of a machine of said industrial plant (1a), or a class of risk of failure of one or more components of said industrial plant (1a).

3. The method according to claim 1 or claim 2, wherein said generating (1408) a training dataset (406) as a function of said values (300) of said current operating condition (CA) of said industrial plant (1a) and said dataset (400; 202) of operating conditions that can be implemented by said industrial plant (1a) comprises:
- analyzing said dataset (400; 202) of operating conditions that can be implemented by said industrial plant (1a) to select a subset of operating conditions (402; 404) of said dataset (400; 202) of implementable operating conditions for which the state class (v) has a value that corresponds to the requested state class (TC);
- repeating the following steps for a plurality of times:
- selecting (1456) an operating condition of said subset of operating conditions (402; 404);
- determining (1458) the values of a point (406s) that is located in a space between the values (300) of said current operating condition (CA) and the values (404s) of said selected operating condition;
- estimating, by means of said first classifier, a state class (v) of said industrial plant (1a) for said determined values; and
- adding said determined values (406s) and the respective estimated state class (v) to said training dataset (406), wherein said determined values (406s) and the respective estimated state class represents a respective synthetic operating condition.

4. The method according to claim 3, wherein said generating (1408) a training dataset (406) as a function of said values (300) of said current operating condition (CA) of said industrial plant (1a) and said dataset (400; 202) of operating conditions that can be implemented by said industrial plant (1a) comprises:
- determining (1462) whether the number of synthetic operating conditions (406_{TC}) of said training dataset (406) that have the requested class (TC) is less than a first threshold;
- in response to a determination that the number of synthetic operating conditions (406_{TC}) of said training dataset (406) that have the requested class (TC) is less than said first threshold, selecting a point (408) of the training dataset (406) that has the class of said current operating condition (CA), and removing the synthetic operating conditions (406_{AC}) of said training dataset (406) that have the class of said current operating condition (CA), and repeating the following steps for a plurality of times:
- selecting (1456) an operating condition (404s) of said subset of operating conditions (402; 404);
- determining (1458) the values (406s) of a point that is located in a space between the values of said selected synthetic operating condition (408) and the values of said selected operating condition (404_{S});
- estimating by means of said first classifier a state class (v) of said industrial plant (1a) for said determined values; and
- adding said determined values (406s) and the respective estimated state class (v) to said training dataset (406).

5. The method according to claim 3 or claim 4, wherein said generating (1408) a training dataset (406) as a function of said values (300) of said current operating condition (CA) of said industrial plant (1a) and said dataset (400; 202) of operating conditions that can be implemented by said industrial plant (1a) comprises:
- determining (1462) whether the number of synthetic operating conditions (406_{AC}) of said training dataset (406) that have the class of said current operating condition (CA) is less than a second threshold;
- in response to a determination that the number of synthetic operating conditions (406_{AC}) of said training dataset (406) that have the class of said current operating condition (CA) is less than said second threshold, repeating the following steps for a plurality of times:
- selecting the operating conditions (404_{NP}) of said subset of operating conditions (402; 404) that have the shortest distance from said values (300) of said current operating condition (CA);
- selecting (1456) an operating condition of said operating conditions (404_{NP}) of said subset of operating conditions (402; 404) that have the shortest distance from said values (300) of said current operating condition (CA);
- determining (1458) the values of a point (406s) that is located in a space between the values (300) of said current operating condition (CA) and the values (404s) of said selected operating condition;
- estimating by means of said first classifier a state class (v) of said industrial plant (1a) for said determined values; and
- adding said determined values (406s) and the respective estimated state class (v) to said training dataset (406).

6. The method according to any one of claims 3 to 5, wherein said generating (1408) a training dataset (406) as a function of said values (300) of said current operating condition (CA) of said industrial plant (1a) and said dataset (400; 202) of operating conditions that can be implemented by said industrial plant (1a) comprises:
- filtering (1452) said subset of operating conditions (402, 404) to remove outliers from said subset of operating conditions (402).

7. The method according to claim 6, wherein said filtering (1452) said subset of operating conditions (402, 404) to remove outliers from said subset of operating conditions (402) comprises:
- repeating the following steps for each operating condition of said subset of operating conditions (402):
- selecting (1500) an element of said subset of operating conditions (402);
- selecting (1502) a given number of elements of said dataset (400; 202) of implementable operating conditions that have the shortest distance from the selected element;
- determining (1504) the number of the selected elements that have the requested state class (TC);
- determining (1506) whether the number of the selected elements that have the requested state class (TC) is greater than a third threshold;
- in response to a determination that the number of the selected elements that have the requested state class (TC) is greater than said third threshold, adding (1508) the selected element to a first list (402S); and
- in response to a determination that the number of the selected elements that have the requested state class (TC) is not higher than said third threshold, adding (1510) the selected element to a second list (402R);
- determining (1514) whether the number of the elements of said first list (402S) is greater than a fourth threshold;
- in response to a determination that the number of the elements of said first list (402S) is greater than said fourth threshold, using the elements of said first list (402S) as filtered subset of operating conditions (402, 404); and
- in response to a determination that the number of the elements of said first list (402S) is not greater than said fourth threshold, using the elements of said first list (402S) and a given number of elements of said second list (402R) as filtered subset of operating conditions (402, 404).

8. The method according to claim 7, wherein said given number of elements of said second list (402R) corresponds to the elements of said second list (402R) that have the shortest distance from said values (300) of said current operating condition (CA) of said industrial plant (1a).

9. The method according to any one of the preceding claims, wherein said using (1412) said separation plane (502) to determine the values (600, 600') of said plurality of operating variables (p) for an operating condition that has said requested state class (TC) comprises:
- determining a point (600) in said separation plane (502) that has the minimum distance from said values (300) of said current operating condition (CA) of said industrial plant (1a).

10. The method according to claim 9, wherein said using (1412) said separation plane (502) to determine the values (600, 600') of said plurality of operating variables (p) for an operating condition that has said requested state class (TC), comprises:
- analyzing said training dataset (406) to determine for each operating variable (p) a respective minimum value and a respective maximum value; and
- moving to a point (600') that is located in said separation plane (502) and has values for the operating variables (p) that are between the respective minimum and maximum values for the operating variables (p).

11. The method according to claim 10, wherein said moved point (600') satisfies one or more further constraints for each operating variable (p), wherein each further constraint can indicate that:
- the respective operating variable (p) is not modifiable; or
- the respective operating variable (p) can be modified only within a given range.

12. A processing system (40, 60) configured to implement the method according to any one of the preceding claims.

13. A computer program product that can be loaded into a memory of at least one processor and comprises portions of software code, which, when executed by said at least one processor, cause said at least one processor to implement the steps of the method according to any one of claims 1 to 11.
